# EUROPÄISCHE PATENTANMELDUNG

(11) **EP 4 282 245 A1**
(43) Veröffentlichungstag der Anmeldung: **29.11.2023**
(21) Anmeldenummer: 22175592.9
(22) Anmeldetag: 26.05.2022
(51) Int. Cl.: A01D 34/18

(54) **AUSSENSCHUH**

(71) Anmelder: Rapid Technic AG, 8956 Killwangen (CH)
(72) Erfinder: Häfeli, Christian, 6332 Hagendorn (CH)
(74) Vertreter: Fenner, Seraina

(57) **Zusammenfassung**

Aussenschuh zum Anbauen an einen Messerbalken vorzugsweise einen Fingerbalken eines Mähwerks, beinhaltend einen unteren, einen oberen und einen mittleren Bereich, wobei der untere Bereich durch einen quer zum Mähgut verlaufenden und parallel am Messerbalken adaptierbaren Träger gebildet ist und der obere Bereich durch einen Abschnitt gebildet ist dessen Ausrichtung entlang des Mähguts verläuft, wobei der mittlere Bereich eine Windung aufweist, wobei der mittlere Bereich den oberen und unteren Bereich miteinander verbindet und über die Windung die Ausrichtung des Trägers des unteren Bereichs und des Abschnitts des oberen Bereichs zueinander ändert.

## Beschreibung

Die Erfindung betrifft einen Aussenschuh zum Anbauen an einen Messerbalken vorzugsweise einen Fingerbalken eines Mähwerks, beinhaltend einen unteren, einen oberen und einen mittleren Bereich, wobei der untere Bereich durch einen quer zum Mähgut verlaufenden und parallel am Messerbalken adaptierbaren Träger gebildet ist und der obere Bereich durch einen Abschnitt gebildet ist dessen Ausrichtung entlang des Mähguts verläuft sowie das Herstellverfahren des erfindungsgemässen Aussenschuhs.

Aus dem Stand der Technik sind solche Aussenschuhe für Messerbalken bekannt und sind einerseits als Schutz für die äussersten Schneidmesser gedacht, da sie das Einstechen in den Untergrund unterbinden und so die Standzeiten der Messerklingen erhöhen und andererseits dienen sie auch dazu einen besseren Futterabfluss zu gewährleisten.

Die US 4 112 655 veröffentlicht einen solchen Aussenschuh, wobei dieser vor allem auf den Schutz der äussersten Schneide gerichtet ist und nicht das Abfliessen des Futters verbessert.

Im bekannten Stand der Technik ist es nachteilig, dass die Aussenschuhe Kanten und Ecken aufweisen an denen das gemähte Mähgut festhängt und sich dadurch an den Messerbalken meist ungewollte Materialansammlungen bilden und durch die Entfernung dieser Materialansammlungen zeitraubende Unterbrüche im Mähablauf entstehen. Zudem ist das Herstellverfahren solcher Aussenschuhe meist mit einem Fügeverfahren verbunden, was durch die zusätzlichen Verfahrensschritte die Herstellkosten erhöht.

Es ist Aufgabe der Erfindung einen Aussenschuh und ein damit verbundenes Herstellverfahren vorzuschlagen, der den Futterfluss des gemähten Mähguts optimiert, sowie ein gutes Gleiten des Aussenschuhs über Unebenheiten wie Steine ermöglicht und in der Herstellung kostengünstig ist.

Diese Aufgabe wird erfindungsgemäss dadurch gelöst, dass der mittlere Bereich eine Windung aufweist, wobei der mittlere Bereich den oberen und unteren Bereich miteinander verbindet und über die Windung die Ausrichtung des Trägers bzw. des unteren Bereichs und des Abschnitts bzw. des oberen Bereichs zueinander ändert.

Der vorliegende erfindungsgemässe Aussenschuh dient dem Anbauen an einen Messerbalken, vorzugsweise an einen Fingerbalken eines Mähwerks, vorzugsweise einer selbstfahrenden, vorzugsweise einachsigen und manuell lenkbaren Arbeitsmaschine.

Der Aussenschuh beinhaltet einen unteren, einen oberen und einen mittleren Bereich. Der untere Bereich ist durch einen quer zum Mähgut verlaufenden und parallel bzw. plan am Messerbalken adaptierbaren Träger gebildet und ist vorzugsweise flach ausgebildet. Der untere Bereich dient vor allem dem Anbringen des Aussenschuhs jeweils an den beiden Aussenseiten des Messerbalkens, weshalb die jeweils beidseitig an den Messerbalken angebrachten Aussenschuhe spiegelsymmetrisch ausgebildet sind. Vorzugsweise sind zur Befestigung im unteren Bereich Bohrungen oder Langlöcher angeordnet, mittels denen der Aussenschuh am Messerbalken einstellbar befestigt werden kann.

Der obere Bereich des Aussenschuhs ist durch einen Abschnitt gebildet, dessen Ausrichtung entlang des Mähguts verläuft, das heisst, dass sich die Ausrichtung in Bezug auf den unteren Bereich des Aussenschuhs dreht bzw. ändert, vorzugsweise um ca. 90°. Der Träger bzw. der untere Bereich des Aussenschuhs ist quer zum Mähgut bzw. parallel zum Messerbalken, an dem der Aussenschuh adaptiert ist, ausgerichtet und die Ausrichtung des oberen Bereichs des Aussenschuhs verläuft entlang bzw. parallel zum Mähgut bzw. in dessen Wuchsrichtung. Dadurch wird erreicht, dass sich der obere Bereich mühelos durch das stehende Mähgut bzw. Futter kämmt.

Der mittlere Bereich des Aussenschuhs weist eine Windung auf, wobei der mittlere Bereich den oberen und unteren Bereich miteinander verbindet und über die Windung die Ausrichtung des Trägers des unteren Bereichs und des Abschnitts des oberen Bereichs zueinander ändert. Durch die Windung im mittleren Bereich wird ein gleitender Übergang des Abschnitts im oberen Bereich, welcher sich mühelos durch das Mähgut kämmet und dem unteren Bereich, welcher der Befestigung des Aussenschuhs dient, gebildet. Über diese Windung wird zudem erreicht, dass das geschnittene Mähgut gut abfliesst und es an keiner Ecke oder Kante hängen bleiben kann. Des Weiteren bewirkt diese Windung, dass bei einer auftretenden Unebenheit, wie beispielsweise einem Stein, der Aussenschuh durch die gleichmässige und stetig verlaufende Aussenkontur darüber gleitet und nicht daran ansteht. Die Windung ist vorzugsweise spiralförmig ausgebildet und weist eine Steigung auf

Es ist vorteilhaft, wenn der Aussenschuh in der Draufsicht eine L-Form aufweist. Dadurch umrahmt der Aussenschuh den Messerbalken an den äusseren Enden. Dies ermöglicht es, dass der Messerbalken an den Aussenseiten bzw. die äusserste Klinge vor einer Kollision mit Steinen oder dergleichen geschützt ist, sowie der Messerbalken nicht in den Untergrund einstechen kann.

Vorzugsweise weist der Träger des unteren Bereichs in der Draufsicht eine L-Form auf. Dadurch erstreckt sich der untere Bereich jeweils um eines der äusseren Enden des Messerbalkens. Der untere Bereich ist vorzugsweise flach bzw. plan ausgebildet und verleiht dem Messerbalken, unter dem der Träger angeordnet ist, noch mehr Auftrieb. Die längere Seite des L-förmig ausgebildeten unteren Bereichs erstreckt sich parallel zum Messerbalken bzw. quer zur Mährichtung. Die kürzere Seite des L-förmig ausgebildeten Aussenschuhs verläuft am äusseren Ende des Messerbalkens an die der mittlere Bereich des Aussenschuhs anschliesst.

Es ist zu bevorzugen, wenn der mittlere Bereich an das freie bzw. aussenliegende Ende des unteren Bereichs des Aussenschuhs anschliesst und über die Windung im mittleren Bereich die Ausrichtung ändert und in den oberen Bereich übergeht bzw. dieser an den mittleren Bereich anschliesst.

Vorzugsweise schliesst der obere Bereich an den mittleren Bereich an und erstreckt sich durch eine verjüngend verlaufende Bogenform nach oben. Dadurch, dass sich der obere Bereich durch eine konkave Bogenform nach oben erstreckt und vom Boden abhebt, bildet die Spitze dem Bedienpersonal eine gute Anzeige, wo sich das Ende des Messerbalkens im Mähgut befindet und die Überlappung des Mähbereichs kann dadurch reduziert werden, was eine Effizienzsteigerung bewirkt. Zudem ist es vorteilhaft, wenn der obere Bereich sich leicht zur Mitte des Messerbalkens hinneigt, wodurch verflochtenes Futter besser getrennt werden kann und dem Messerbalken ohne Verstopfung zu verursachen zugeführt werden kann.

Als bevorzugte Ausgestaltung hat sich gezeigt, wenn der Aussenschuh aus einem Flachmaterial gebildet ist. Dadurch lässt sich erreichen, dass der untere Bereich plan am Messerbalken anliegt und dann über die Windung im mittleren Bereich spiralförmig gedreht ist und der obere Bereich daran anschliesst, bei dem die Fläche anders als im unteren Bereich ausgerichtet ist bzw. entlang des Mähguts verläuft. Wobei sich die spiralförmige Windung im mittleren Bereich für den am linken und rechten Messerbalkenende angeordneten Aussenschuh jeweils in die andere Richtung dreht, so dass das Mähgut an beiden Messerbalkenenden abgewiesen wird und nicht hängen bleibt.

Als vorteilhaft hat sich gezeigt, wenn im unteren Bereich das Flachmaterial quer zum Mähgut verläuft und über die Windung im mittleren Bereich das Flachmaterial spiralförmig gewunden ist, so dass das Flachmaterial im oberen Bereich anders ausgerichtet ist, vorzugsweise entlang bzw. parallel bzw. in Wuchsrichtung des Mähguts. Wie bereits erwähnt, wird dann mittels des oberen Bereichs das Mähgut gekämmt und dem Messerbalken zugeführt und nach dem Schnitt über die spiralförmige Windung nach aussenhin abgewiesen wird.

Als bevorzugte Ausführung hat sich gezeigt, wenn die aussen verlaufende, sich über den unteren, oberen und mittleren Bereich des Aussenschuhs ersteckende Stirnfläche ausschliesslich Verrundungen aufweist und somit keine scharfen Ecken oder Kanten vorliegen. Dies gewährleistet, dass das geschnittene Mähgut nicht an einer Kante festhängt und dadurch ein guter Abfluss des Mähguts vorliegt, was zu weniger Unterbrüchen im Ablauf führt.

Vorzugsweise ist der Aussenschuh einteilig bzw. einstückig aus ausschliesslich einem Flachmaterial gebildet. Dadurch können einerseits Ecken und Kanten vermieden werden, wie auch der Herstellungsaufwand reduziert werden.

Das erfindungsgemässe Verfahren zur Herstellung eines Aussenschuhs zum Anbauen an einen Messerbalken, vorzugsweise einen Fingerbalken eines Mähwerks, besteht darin, dass der Aussenschuh ausschliesslich durch ein Heraustrennen einer Kontur, vorzugsweise mittels Lasern oder Wasserstrahlschneiden, aus einem Flachmaterial vorzugsweise einem Metall und ein anschliessendes Biegen hergestellt wird.

Als vorteilhaft hat sich gezeigt, wenn kein Fügeverfahren wie auch kein Erwärmungsschritt eingesetzt wird. Durch das Einsparen dieser Schritte können die Aussenschuhe wirtschaftlicher und schneller hergestellt werden.

Zudem hat es den Vorteil, dass für die Herstellung eines linken und rechten Aussenschuhs für einen Messerbalken das gleiche herausgetrennte Teil bzw. die gleiche Form des Teils verwendet werden kann, dazu muss es nur auf die andere Seite gewendet werden und die Windung im mittleren Bereich muss in die andere Richtung erfolgen, so dass die Windung der äusseren Stirnseite in Mährichtung nach aussen verläuft, um den Abfluss des Mähguts sicherzustellen.

Alle Ausgestaltungmöglichkeiten sind untereinander frei kombinierbar, sowie die Merkmale des Aussenschuhs mit dem des Verfahrens kombinierbar sind wie auch umgekehrt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht eines an einem Messerbalkenende befestigten erfindungsgemässen Aussenschuhs,
- Fig. 2: eine dreidimensionale Ansicht eines kompletten Messerbalkens mit den Aussenschuhen an den beiden Enden,
- Fig. 3: eine Draufsicht eines kompletten Messerbalkens mit den Aussenschuhen an den beiden Enden und
- Fig. 4: eine Frontansicht eines kompletten Messerbalkens mit den Aussenschuhen an den beiden Enden.

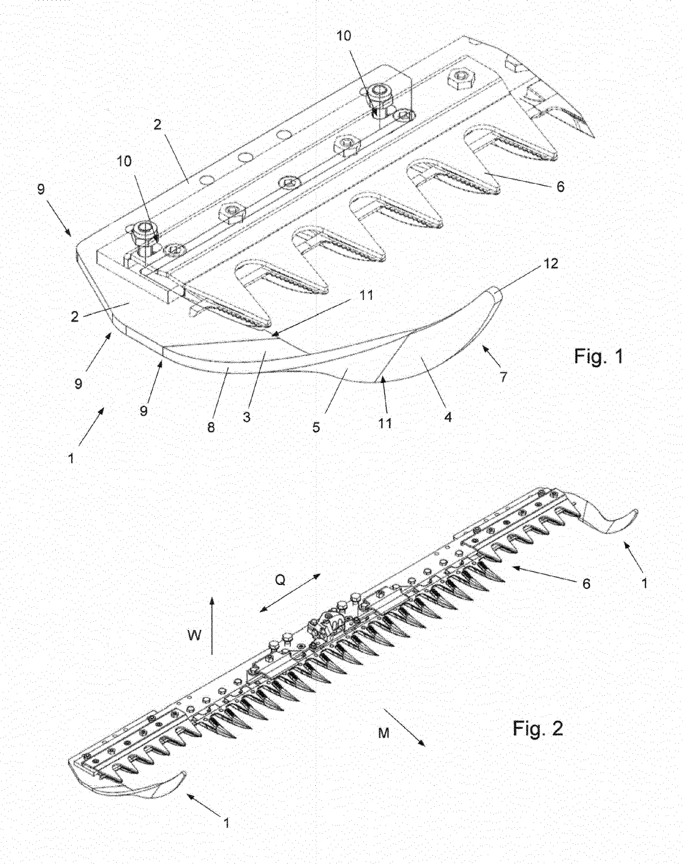

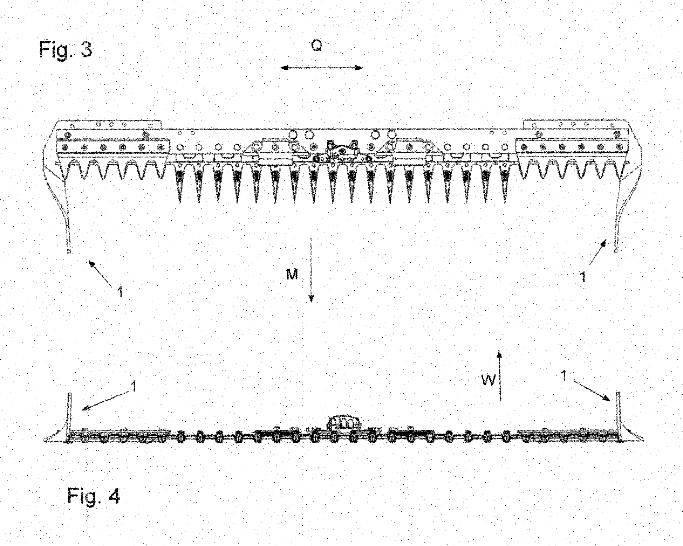

Die in Fig. 1 dargestellte Zeichnung zeigt einen erfindungsgemässen Aussenschuh 1 befestigt an einem Ende eines Messerbalkens 6, gestrichelt dargestellt. Der erfindungsgemässe Aussenschuh 1 beinhaltet einen unteren Bereich 2, der als Träger 2 ausgebildet ist und dem Befestigen am Messerbalken 6 dient. Zur Befestigung sind vorzugsweise Langlöcher 10 im unteren Bereich 2 angeordnet mittels denen sich der Aussenschuh 1 am Balkenende positionieren und einstellen lässt. Zudem beinhaltet der Aussenschuh 1 einen mittleren 3 und oberen 4 Bereich, wobei der der Aussenschuh 1 vorzugsweise aus einem Flachmaterial gebildet ist, vorzugsweise aus einem einteiligen Flachmaterial, wie in den Figuren dargestellt, wobei auch mehrteiliges Grundmaterial denkbar ist aber durch die zusätzlichen Bearbeitungsschritte weniger wirtschaftlich in der Herstellung. Der mittlere Bereich 3 schliesst nahtlos an den unteren Bereich 2 an, was in den Figuren durch eine schräg verlaufende fiktive Kante 11 dargestellt wird. Auch der an den mittleren Bereich 3 anschliessende obere Bereich 4 schliesst nahtlos an, was auch mit einer fiktiven Kante 11 dargestellt wird. Der untere Bereich 2 verläuft parallel zum Messerbalken 6 bzw. quer zur Ausrichtung des Mähguts Q bzw. dessen Wuchsrichtung W. Der untere Bereich 2 des Aussenschuhs 1 weist wie der Aussenschuh selbst eine L-Form auf, was gut aus Fig. 3 zu erkennen ist. Dadurch werden die Enden des Messerbalkens 6 gut geschützt. Der mittlere Bereich 3 weist eine Windung 5 auf, die den quer zum Mähgut verlaufenden unteren Bereich 2, welcher plan am Messerbalken 6 anliegt mit dem oberen Bereich 4 des Aussenschuhs 1, welcher parallel zur Wuchsrichtung W des Mähguts ausgerichtet ist, verbindet. Der oberer Bereich 4 ist vorzugsweise leicht gegen die Mitte hin des Messerbalkens 6 geneigt, was aus Fig. 4 ersichtlich ist. Die Windung 5 weist einen spiralförmigen Verlauf auf, die ca. eine viertel Umdrehung erfasst und anschliessend der obere Bereich 4 daran anschliesst. Der obere Bereich 4 weist eine verjüngend verlaufende Bogenform 7 auf, die sich in einer abgerundeten Spitze 12 erstreckt. Die Spitze 12 dient wie bereits erwähnt dem Bedienpersonal neben der guten Kämmeigenschaft des Mähguts auch dem Erkennen der Position des Endes des Messerbalkens 6. Der obere Bereich 4 hebt sich durch die verjüngende Bogenform 7 auch vom Boden ab und ermöglicht dadurch, wie auch durch den sanft verlaufenden Übergang zwischen den Bereichen, dass der Aussenschuh 1 über Unebenheiten wie Steine und dergleichen darüber gleitet und nicht daran ansteht.

In den Figuren ist gut zu erkennen, dass die Stirnfläche 8, welche sich über den unteren, oberen und mittleren Bereich 2, 3, 4 erstreckt ausschliesslich Verrundungen 9 aufweist, um Ecken und Kanten zu vermeiden, die das Abfliessen des Mähguts behindern könnten. In den Fig. 1 und 2 ist gut zu erkennen, dass die Windung 5 der Aussenschuhe jeweils in Mährichtung M hin nach aussen gerichtet ist und so das Mähgut gut abfliessen lässt.

### Bezugszeichenliste

- 1: Aussenschuh
- 2: Unterer Bereich, Träger
- 3: Mittlerer Bereich
- 4: Oberer Bereich, Abschnitt
- 5: Windung
- 6: Messerbalken
- 7: Verjüngend verlaufende Bogenform
- 8: Stirnfläche
- 9: Verrundung
- 10: Langlöcher
- 11: Fiktive Kante
- 12: Abgerundete Spitze

- M: Mährichtung
- Q: quer zum Mähgutverlauf, Wuchsrichtung
- W: Wuchsrichtung Mähgut

## Patentansprüche

1. Aussenschuh (1) zum Anbauen an einen Messerbalken (6) vorzugsweise einen Fingerbalken eines Mähwerks, beinhaltend einen unteren (2), einen oberen (4) und einen mittleren (3) Bereich, wobei der untere Bereich (2) durch einen quer (Q) zum Mähgut verlaufenden und parallel am Messerbalken (6) adaptierbaren Träger (2) gebildet ist und der obere Bereich (4) durch einen Abschnitt gebildet ist dessen Ausrichtung entlang des Mähguts (W) verläuft, **dadurch gekennzeichnet, dass** der mittlere Bereich (3) eine Windung (5) aufweist, wobei der mittlere Bereich (3) den oberen (4) und unteren (2) Bereich miteinander verbindet und über die Windung (5) die Ausrichtung des Trägers (2) bzw. des unteren Bereichs (2) und des Abschnitts (4) bzw. des oberen Bereichs (4) zueinander ändert.

2. Aussenschuh (1) nach Anspruch 1, **dadurch gekennzeichnet, dass** der Aussenschuh (1) in der Draufsicht eine L-Form aufweist.

3. Aussenschuh (1) nach einem der Ansprüche 1 oder 2, **dadurch gekennzeichnet, dass** der Träger (2) bzw. der untere Bereich (2) in der Draufsicht eine L-Form aufweist.

4. Aussenschuh (1) nach einem der Ansprüche 1 bis 3, **dadurch gekennzeichnet, dass** der mittlere Bereich (3) des Aussenschuhs (1) an das freie, das den Messerbalken (6) seitlich umgebende bzw. aussenliegende Ende des unteren Bereichs (2) des Aussenschuhs (1) anschliesst.

5. Aussenschuh (1) nach einem der Ansprüche 1 bis 4, **dadurch gekennzeichnet, dass** der obere Bereich (4) an den mittleren Bereich (3) anschliesst und sich dieser durch eine verjüngend verlaufende Bogenform (7) nach oben erstreckt.

6. Aussenschuh (1) nach einem der Ansprüche 1 bis 5, **dadurch gekennzeichnet, dass** der Aussenschuh (1) aus einem Flachmaterial gebildet ist.

7. Aussenschuh (1) nach Anspruch 6, **dadurch gekennzeichnet, dass** im unteren Bereich (2) das Flachmaterial quer (Q) zum Mähgut verläuft und über die Windung (5) im mittleren Bereich (3) das Flachmaterial gewunden ist, so dass das Flachmaterial des Aussenschuhs (1) im oberen Bereich (4) entlang des Mähgut verläuft bzw. ausgerichtet ist.

8. Aussenschuh (1) nach einem der Ansprüche 1 bis 7, **dadurch gekennzeichnet, dass** die aussen verlaufende, sich über den unteren (2), oberen (4) und mittleren (3) Bereich des Aussenschuhs ersteckende Stirnfläche (8), Verrundungen (9) aufweist und somit keine scharfen Ecken oder Kanten vorliegen.

9. Aussenschuh (1) nach einem der Ansprüche 1 bis 8, **dadurch gekennzeichnet, dass** der Aussenschuh (1) einteilig bzw. einstückig aus einem Flachmaterial gebildet ist.

10. Verfahren zur Herstellung eines Aussenschuhs (1) nach einem der Ansprüche 1 bis 9, **dadurch gekennzeichnet, dass** der Aussenschuh (1) durch ein Heraustrennen einer Kontur, vorzugsweise mittels Lasern oder Wasserstrahlschneidens, aus einem Flachmaterial und ein anschliessendes Biegen hergestellt wird.

11. Verfahren nach Anspruch 10, **dadurch gekennzeichnet, dass** kein Fügeverfahren eingesetzt wird.
